# EUROPÄISCHE PATENTSCHRIFT

(11) **EP 3 665 400 B1**
(45) Veröffentlichungstag und Bekanntmachung des Hinweises auf die Patenterteilung: **19.01.2022**
(21) Anmeldenummer: 18749295.4
(22) Anmeldetag: 05.07.2018
(51) Int. Cl.: F16F 15/14

(54) **FLIEHKRAFTPENDEL MIT SYNCHRONTOPF**
PENDULUM ABSORBER WITH SYNCHRONIZER
AMORTISSEMENT PENDULAIRE AYANT UN SYNCHRONISEUR

(30) Priorität: 07.08.2017 DE 102017117822
(43) Veröffentlichungstag der Anmeldung: 17.06.2020
(73) Patentinhaber: Schaeffler Technologies AG & Co. KG, 91074 Herzogenaurach (DE)
(72) Erfinder: JUNKER, Uli, 77652 Offenburg (DE); MENDE, Hartmut, 77815 Bühl (DE)
(86) Internationale Anmeldenummer: PCT/DE2018/100616
(87) Internationale Veröffentlichungsnummer: WO 2019/029764

(56) Entgegenhaltungen:
- DE-A1-102014 012 832
- DE-A1-102015 202 021
- DE-A1-102016 201 099

## Beschreibung

Die Erfindung betrifft eine Fliehkraftpendeleinrichtung zur Anordnung im Antriebsstrang eines Kraftfahrzeugs, mit wenigstens zwei Fliehkraftpendeln, die an einer Trägerscheibe angeordnet sind und entlang einer vorgegebenen Pendelbahn eine Relativbewegung zu der Trägerscheibe ausführen können, wobei jedes Fliehkraftpendel zwei Pendelmassen umfasst, die voneinander beabstandet fest miteinander verbunden sind und beiderseits der Trägerscheibe angeordnet sind, wobei die Fliehkraftpendel mittels radial elastischer Federelemente über einen Synchronring miteinander gekoppelt sind.

Eine gattungsgemäße Fliehkraftpendeleinrichtung ist aus der DE 10 2016 201099 A1 bekannt.

Zur Reduktion von Torsionsschwingungen werden auf einem rotierenden Teil des Torsionsschwingungssystems zusätzliche bewegliche Massen als sogenannte Fliehkraftpendel angebracht. Diese Massen führen im Feld der Zentrifugalbeschleunigung Schwingungen auf vorgegebenen Bahnen aus, wenn sie durch Drehzahlungleichförmigkeiten angeregt werden. Durch diese Schwingungen wird der Erregerschwingung zu passenden Zeiten Energie entzogen und wieder zugeführt, sodass es zu einer Dämpfung der Erregerschwingung kommt, die Pendelmasse also als Schwingungstilger wirkt. Da sowohl die Eigenfrequenz der Fliehkraftpendelschwingung als auch die Erregerfrequenz proportional zur Drehzahl sind, kann eine Tilgerwirkung eines Fliehkraftpendels über den ganzen Frequenzbereich der durch Drehzahlungleichheiten angeregten Schwingungen erzielt werden. Ein Fliehkraftpendel der betreffenden Art dient der Reduzierung von Schwingungen und Geräuschen im Antriebsstrang eines Kraftfahrzeugs. Ein solches Fliehkraftpendel umfasst wenigstens eine Pendelmasse, die beispielsweise mittels Trägerrollen oder dergleichen an einer Trägerscheibe oder einem Trägerelement aufgehängt ist und entlang vorgegebener Pendelbahnen eine Relativbewegung zu der Trägerscheibe bzw. Trägerelement ausführen kann, um hierbei einen variablen Abstand zur Rotationsachse der Trägerscheibe einzunehmen.

Eine Aufgabe der Erfindung ist eine Verbesserung der Tilgungseigenschaften und Reduzierung von Anschlaggeräuschen der Pendelmassen.

Dieses Problem wird durch eine Fliehkraftpendeleinrichtung nach Anspruch 1 gelöst. Bevorzugte Ausführungsformen, Ausgestaltungen oder Weiterbildungen der Erfindung sind in den abhängigen Ansprüchen angegeben.

Das oben genannte Problem wird insbesondere gelöst durch eine Fliehkraftpendeleinrichtung zur Anordnung im Antriebsstrang eines Kraftfahrzeugs, mit wenigstens zwei Fliehkraftpendeln, die an einer Trägerscheibe angeordnet sind und entlang einer vorgegebenen Pendelbahn eine Relativbewegung zu der Trägerscheibe ausführen können, wobei jedes Fliehkraftpendel zwei Pendelmassen umfasst, die voneinander beabstandet fest miteinander verbunden sind und beiderseits der Trägerscheibe angeordnet sind, wobei die Fliehkraftpendel mittels radial elastischer Federelemente über einen Synchronring miteinander gekoppelt sind, und wobei der Synchronring Teil einer topfförmigen Koppelbaugruppe ist.

Die Koppelbaugruppe ist gemäß der Erfindung fliegend gegenüber der Trägerscheibe gelagert. Der Topf wird dabei selbst nur über die Blattfedern gehalten werden, so dass er keine störende Reibung erzeugen kann.

Die Koppelbaugruppe umfasst gemäß der Erfindung einen Synchronring sowie einen radial verlaufenden Innenring. Der Synchronring dient der Synchronisierung der Pendelbewegungen vermittels der elastischen Federelemente, der Innenring dient der Führung der Baugruppe und der Wegbegrenzung insbesondere in radialer Richtung in einem Schadensfall. Der Innenring ist in einer Ausführungsform der Erfindung von der Trägerscheibe beabstandet. Dadurch entsteht keine Reibung zwischen Innenring und Trägerscheibe.

Die Koppelbaugruppe umfasst in einer Ausführungsform der Erfindung ein topförmiges Zwischenteil, das Synchronring und Innenring miteinander verbindet. Das Zwischenteil vergrößert den Bauraum für die Fliehkraftpendel in axialer Richtung.

Die Trägerscheibe weist gemäß der Erfindung Warzen auf, die einen Anschlag für den radialen Innenring bilden. Die radiale Beweglichkeit des Topfes wird nach überwinden eines geringen Weges begrenzt, um eine fail-safe Funktion sicherzustellen, falls z.B. die Pendelmassen brechen sollten. Für diesen Fall fungiert der außenliegende Synchronring als wirksamer Berstschutz, der das Wegfliegen der Pendelmassen verhindert. Hierbei ist die Wirksamkeit durch die steife Topfform wesentlich höher als bei einem einfachen (weichen) Ring, wie er im Stand der Technik bekannt ist.

Die Warzen sind in einer Ausführungsform der Erfindung aus der Trägerscheibe herausgedrückt. In anderen, nicht erfindungsgemäßen Ausführungsformen, können statt Warzen aber auch andere Maßnahmen herangezogen werden, wie z.B. eine entsprechende Flanschkontur (Topfung), ein separater Zusatzring, eine angepasste Kontur der Sekundärschwungscheibe (beim ZMS) oder des Masserings (beim Doppelkupplungsdämpfer). Der Innenring ist in einer Ausführungsform der Erfindung radial beabstandet von den Warzen angeordnet. Ein Kontakt des Innenringes mit den Warzen oder dergleichen erfolgt nur bei einer starken radialen Verschiebung des Innenringes beispielsweise im Schadensfall.

Die radial elastischen Federelemente sind in einer Ausführungsform der Erfindung Blattfedern. Diese sind kostengünstig einfach zu fertigen und können mit geringem Aufwand montiert und leicht und sicher beispielsweise mit Nieten befestigt werden. Die radial elastischen Federelemente umfassen in einer Ausführungsform der Erfindung Mittel zur Zentrierung gegenüber den Fliehkraftpendeln. Es Bedarf daher keiner weiteren Führung der Topfbaugruppe. Die Mittel zur Zentrierung gegenüber den Fliehkraftpendeln können beispielsweise ein radial nach innen vorstehender Bereich der Vorderkante der Blattfeder sein.

Ein Ausführungsbeispiel der Erfindung wird nachfolgend anhand der beiliegenden Zeichnungen näher erläutert. Dabei zeigen:
- Fig. 1: ein Ausführungsbeispiel einer erfindungsgemäßen Fliehkraftpendeleinrichtung in einer Draufsicht,

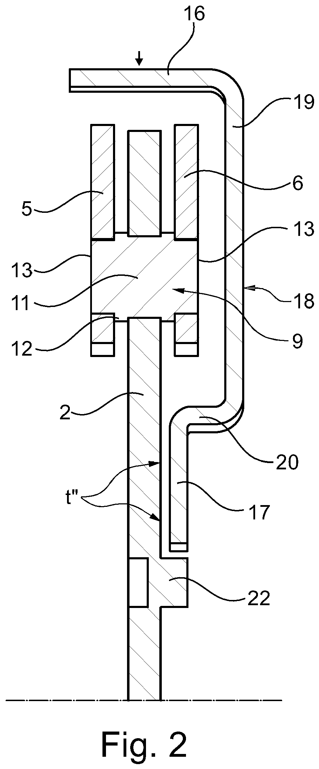

- Fig. 2: einen Schnitt A-A in Figur 1,

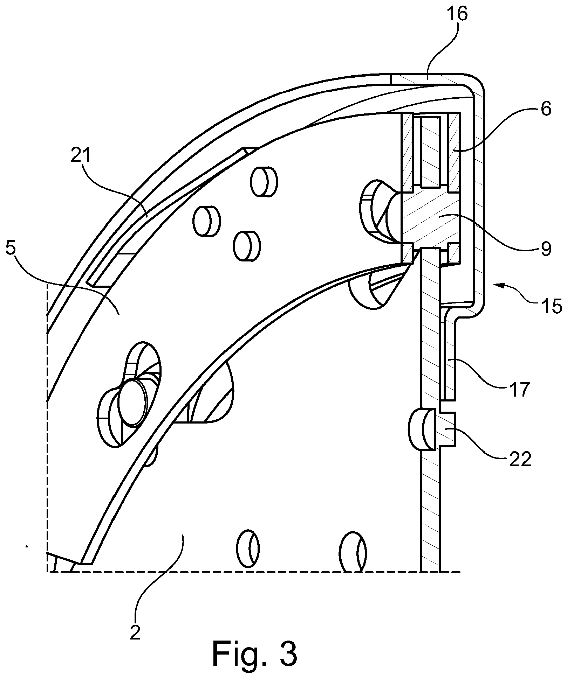

- Fig. 3: eine dreidimensionale Ansicht des Schnittes A-A in Figur 1,

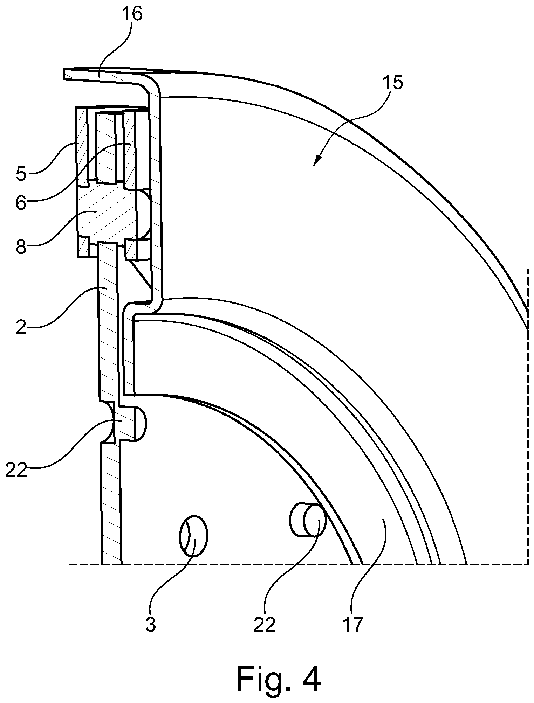

- Fig. 4: eine dreidimensionale Ansicht des Schnittes A-A in Figur 1 entgegen der Blickrichtung der Schnittpfeile.

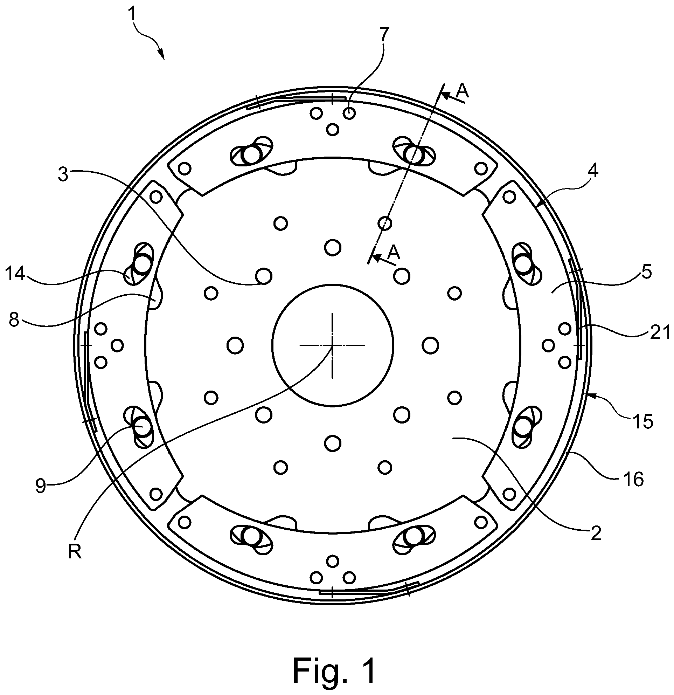

Fig. 1 zeigt ein Ausführungsbeispiel einer Fliehkraftpendeleinrichtung 1 in einer Draufsicht. Die Fliehkraftpendeleinrichtung 1 ist im Wesentlichen rotationssymmetrisch zu einer Rotationsachse R. Unter der Umfangsrichtung wird hier eine Drehung um die Rotationsachse R verstanden, unter der axialen Richtung wird die Richtung parallel zur Rotationsachse R und unter der radialen Richtung jede Richtung senkrecht zur Rotationsachse R verstanden. Die Fliehkraftpendeleinrichtung 1 wird zwischen einer Antriebseinheit, insbesondere einem Verbrennungsmotor mit einer Kurbelwelle, und einer ausrückbaren Fahrzeugkupplung, die mit einem Getriebe gekoppelt ist, angeordnet. Die Fliehkraftpendeleinrichtung 1 umfasst eine Trägerscheibe 2, die in Einbaulage beispielsweise mit einem nicht dargestellten Sekundärflansch eines Zweimassenschwungrades im Antriebsstrang eines Kraftfahrzeugs verbunden ist. Die Verbindung erfolgt durch eine Verschraubung, wozu eine Vielzahl von Bohrungen 3 zur Aufnahme von Schrauben über den Umfang der Fliehkraftpendeleinrichtung 1 verteilt angeordnet sind.

Über den Umfang der Fliehkraftpendeleinrichtung 1 verteilt sind mehrere, im vorliegenden Ausführungsbeispiel vier, Fliehkraftpendel 4 angeordnet. Die Fliehkraftpendel 4 umfassen jeweils eine erste oder kupplungsseitige Pendelmasse 5 und eine zweite oder getriebeseitige Pendelmasse 6. Die Begriffe kupplungsseitig und getriebeseitig dienen hier allein der leichteren Unterscheidbarkeit und dem leichteren Verständnis der Vorrichtung und der Anordnung der Teile der Vorrichtung. Die erste Pendelmasse 5 und die zweite Pendelmasse 6 sind beiderseits der Trägerscheibe 2 angeordnet und fest miteinander verbunden. Die erste Pendelmasse 5 und die zweite Pendelmasse 6 werden durch mehrere, im vorliegenden Ausführungsbeispiel drei, Nietbolzen 7 fest miteinander verbunden.

Sowohl in der ersten Pendelmasse 5 als auch der zweiten Pendelmasse 6 sind mehrere Bohrungen eingebracht, die der Aufnahme der Nietbolzen 7 dienen.

In Langlöchern 8 der Trägerscheibe 2 sind Pendelrollen 9 aufgenommen. Die Pendelrollen 9 umfassen jeweils ein zylindrisches Mittelteil 11, welches an beiden axialen Enden mit Rollenzentrierborden 12 versehen ist. Die Rollenzentrierborde 12 dienen der axialen formschlüssigen Festlegung der Pendelrollen 9 in den Langlöchern 8. Über die jeweiligen Rollenzentrierborde 12 axial hinausragende Rollenenden 13 der Pendelrollen 9 ragen jeweils in Langlöcher 14 in den Pendelmassen 5 bzw. 6. Die Langlöcher 14 ermöglichen zusammen mit den Langlöchern 8 und den Pendelrollen 9 eine Pendelbewegung der Fliehkraftpendel 4 gegenüber der Trägerscheibe 2. Dazu sind die Rollenbahnen für die Pendelrollen 9 nierenförmig gestaltet und bilden zusammen mit den Pendelrollen 9 und den Langlöchern 8 eine Kulissenführung für die Fliehkraftpendel 4.

Die Laufbahnen der Pendelrollen 9 gegenüber dem Fliehkraftpendelflansch 2 bzw. den Fliehkraftpendeln 4 sind so ausgelegt, dass die Fliehkraftpendel 4 eine Pendelbewegung eines so genannten Parallelpendels (auch als 1. Generation bekannt), oder eines so genannten Trapezpendels (2. Generation) ausführen kann. Bei dem Parallelpendel führt das Fliehkraftpendel 4 relativ zu ihrer Aufhängung an dem Pendelflansch 2 keine Drehbewegung aus. Bei dem Trapezpendel wird das eine Pendelende bei der Pendelbewegung radial nach innen geführt, während das andere Ende gleichzeitig radial nach außen wandert. Die Eigenkreisfrequenz bzw. Tilgerfrequenz des Fliehkraftpendels 4 ist proportional zur Drehzahl der Fliehkraftpendeleinrichtung 1. Bei Abstimmung nahe oder direkt auf die Haupterregeranordnung des Antriebsstrangs erfolgt eine Reduzierung der Schwingungsamplitude über dem gesamten Drehzahlbereich.

An der Trägerscheibe 2 ist ein Synchrontopf 15 als topfförmige Koppelbaugruppe angeordnet. Der Synchrontopf 15 umfasst einen Außenring als Synchronring 16, der die Fliehkraftpendel 4 außen umfasst, sowie einen Innenring 17, wobei Synchronring 16 und Innenring 17 über ein topförmiges Zwischenteil 18 miteinander verbunden sind. Der Synchrontopf 15 ist aus einem Blechzuschnitt geformt und einteilig, also nicht gefügt. Das topförmige Zwischenteil 18 umfasst ein radial verlaufenden Zwischenteilabschnitt 19 und einen röhrenförmigen Zwischenteilabschnitt 20.

Der Innenring 17 ist von der Trägerscheibe 2 beabstandet angeordnet, im Betrieb verbleibt zwischen beiden also ein radial verlaufender Spalt.

Um den Umfang des Synchronrings 16 verteilt sind jeweils Blattfedern 21 angeordnet, die mit den Pendelmassen 5, 6 in Kontakt sind und diese wie im Stand der Technik in ihrer Pendelbewegung dämpfen und deren Position axial nach innen vorspannen. Die Blattfedern 21 sind mit dem Synchronring 16 vernietet. Die Blattfedern 21 weisen an ihrem den Pendelmassen 5, 6 zugewandten Enden eine im axialen Querschnitt U förmige Ausbuchtung nach innen auf, die zwischen die Pendelmassen 5, 6 ragt und so eine formschlüssige axiale Festlegung der Blattfedern 21 und damit eine axiale Festlegung des mit diesen fest verbundenen Synchrontopfes 15 bewirkt.

Der Innenring 17 ist ringscheibenförmig, wobei vom Innenumfang beabstandet aus der Trägerscheibe 2 ausgestellte Warzen 22 angeordnet sind. Der Innenumfang des Innenrings 17 ist soweit von den Warzen 22 beabstandet, dass beide im normalen betrieb nicht in Kontakt treten. Die Warzen 22 dienen als radialer Endanschlag für den Synchrontopf 15 beispielsweise bei einem Bauteilversagen der Blattfedern 21.

### `Bezugszeichenliste

- 1: Fliehkraftpendeleinrichtung
- 2: Trägerscheibe
- 3: Bohrung
- 4: Fliehkraftpendel
- 5: Pendelmasse
- 6: Pendelmasse
- 7: Nietbolzen
- 8: Langloch in Trägerscheibe
- 9: Pendelrollen
- 11: Mittelteil
- 12: Rollenzentrierborde
- 13: Rollenenden
- 14: Langloch in Pendelmasse
- 15: Synchrontopf
- 16: Synchronring
- 17: Innenring
- 18: topförmiges Zwischenteil
- 19: Zwischenteilabschnitt
- 20: Zwischenteilabschnitt
- 21: Blattfeder
- 22: Warzen

## Patentansprüche

1. Fliehkraftpendeleinrichtung (1) zur Anordnung im Antriebsstrang eines Kraftfahrzeugs, mit wenigstens zwei Fliehkraftpendeln (4), die an einer Trägerscheibe (2) angeordnet sind und entlang einer vorgegebenen Pendelbahn eine Relativbewegung zu der Trägerscheibe (2) ausführen können, wobei jedes Fliehkraftpendel (4) zwei Pendelmassen (5, 6) umfasst, die voneinander beabstandet fest miteinander verbunden sind und beiderseits der Trägerscheibe (2) angeordnet sind, wobei die Fliehkraftpendel (4) mittels radial elastischer Federelemente (21) über einen Synchronring (16) miteinander gekoppelt sind, wobei der Synchronring (16) Teil einer topfförmigen Koppelbaugruppe (15) ist, wobei die Koppelbaugruppe (15) fliegend gegenüber der Trägerscheibe (2) gelagert ist, wobei die Koppelbaugruppe (15) einen Synchronring (16) sowie einen radialen Innenring (17) umfasst, **dadurch gekennzeichnet, dass** die Trägerscheibe (2) Warzen (22) aufweist, die einen Anschlag für den radialen Innenring (17) bilden.

2. Fliehkraftpendeleinrichtung nach Anspruch 1, **dadurch gekennzeichnet, dass** der Innenring (17) von der Trägerscheibe (2) beabstandet ist.

3. Fliehkraftpendeleinrichtung nach Anspruch 2, **dadurch gekennzeichnet, dass** die Koppelbaugruppe (15) ein topförmiges Zwischenteil (18) umfasst, das Synchronring (16) und Innenring (17) miteinander verbindet.

4. Fliehkraftpendeleinrichtung nacheinem der Ansprüche 1 bis 3, **dadurch gekennzeichnet, dass** die Warzen (22) aus der Trägerscheibe (2) herausgedrückt sind.

5. Fliehkraftpendeleinrichtung nach Anspruch 4, **dadurch gekennzeichnet, dass** der Innenring (17) radial beabstandet von den Warzen (22) angeordnet ist.

6. Fliehkraftpendeleinrichtung nach einem der vorhergehenden Ansprüche, **dadurch gekennzeichnet, dass** die radial elastischen Federelemente (21) Blattfedern sind.

7. Fliehkraftpendeleinrichtung nach einem der vorhergehenden Ansprüche, **dadurch gekennzeichnet, dass** die radial elastischen Federelemente (21) Mittel zur Zentrierung gegenüber den Fliehkraftpendeln (4) umfassen.

## Claims

1. A centrifugal pendulum device (1) for arrangement in the drive train of a motor vehicle, having at least two centrifugal pendulums (4) which are arranged on a carrier disc (2) and can execute a movement relative to the carrier disc (2) along a predetermined pendulum path, wherein each centrifugal pendulum (4) comprises two pendulum masses (5, 6) which are firmly connected to one another at a distance and arranged on both sides of the carrier disc (2), wherein the centrifugal pendulums (4) are coupled to one another via a synchronizing ring (16) by means of radially elastic spring elements (21), wherein the synchronizing ring (16) is part of a pot-shaped coupling assembly (15), wherein the coupling assembly (15) is mounted in an overhung position with respect to the carrier disc (2), wherein the coupling assembly (15) comprises a synchronizing ring (16), as well as a radial inner ring (17), **characterised in that** the carrier disc (2) has projections (22) which form a stop for the radial inner ring (17).

2. The centrifugal pendulum device according to claim 1, **characterised in that** the inner ring (17) is at a distance from the carrier disc (2).

3. The centrifugal pendulum device according to claim 2, **characterised in that** the coupling assembly (15) comprises a pot-shaped intermediate part (18), connecting the synchronizing ring (16) and inner ring (17) to one another.

4. The centrifugal pendulum device according to one of claims 1 to 3, **characterised in that** the projections (22) are pressed out from the carrier disc (2).

5. The centrifugal pendulum device according to claim 4, **characterised in that** the inner ring (17) is arranged radially at a distance from the projections (22).

6. The centrifugal pendulum device according to one of the previous claims, **characterised in that** the radially elastic spring elements (21) are leaf springs.

7. The centrifugal pendulum device according to one of the previous claims, **characterised in that** the radially elastic spring elements (21) comprise means for centring with respect to the centrifugal pendulum (4).

## Revendications

1. Dispositif pendulaire centrifuge (1) destiné à être disposé dans une chaîne cinématique d'un véhicule automobile, comportant au moins deux pendules centrifuges (4), lesquels sont disposés sur un disque support (2) et lesquels peuvent effectuer un mouvement relatif par rapport au disque support (2) le long d'une trajectoire pendulaire prédéfinie, dans lequel chaque pendule centrifuge (4) comprend deux masses pendulaires (5, 6), lesquelles sont reliées ensemble à demeure espacées l'une de l'autre et lesquelles sont disposées de chaque côté du disque support (2), dans lequel les pendules centrifuge (4) sont accouplés l'un à l'autre au moyen d'éléments formant ressort (21) radialement élastiques par le biais d'une bague de synchronisation (16), dans lequel la bague de synchronisation (16) fait partie d'un groupe d'accouplement (15) en forme de coupelle, dans lequel le groupe d'accouplement (15) est monté en porte à faux par rapport au disque support (2), dans lequel le groupe d'accouplement (15) comprend une bague de synchronisation (16), ainsi qu'une bague intérieure (17) radiale, **caractérisé en ce que** le disque support (2) comporte des bossages (22), lesquels forment une butée pour la bague intérieure (17) radiale.

2. Dispositif pendulaire centrifuge selon la revendication 1, **caractérisé en ce que** la bague intérieure (17) est éloignée du disque support (2).

3. Dispositif pendulaire centrifuge selon la revendication 2, **caractérisé en ce que** le groupe d'accouplement (15) comprend une partie intermédiaire (18) en forme de coupelle, laquelle relie la bague de synchronisation (16) à la bague intérieure (17).

4. Dispositif pendulaire centrifuge selon l'une quelconque des revendications 1 à 3, **caractérisé en ce que** les bossages (22) sont expulsés du disque support (2).

5. Dispositif pendulaire centrifuge selon la revendication 4, **caractérisé en ce que** la bague intérieure (17) est disposée éloignée radialement des bossages (22).

6. Dispositif pendulaire centrifuge selon l'une quelconque des revendications précédentes, **caractérisé en ce que** les éléments formant ressort (21) radialement élastiques sont des ressorts à lames.

7. Dispositif pendulaire centrifuge selon l'une quelconque des revendications précédentes, **caractérisé en ce que** les éléments formant ressort (21) radialement élastiques comprennent un moyen de centrage par rapport aux pendules centrifuges (4).
